# EUROPEAN PATENT SPECIFICATION

(11) **EP 4 503 751 B1**
(45) Date of publication and mention of the grant of the patent: **03.09.2025**
(21) Application number: 23188819.9
(22) Date of filing: 31.07.2023
(51) Int. Cl.: H04W 48/16, H04W 48/18

(54) **METHOD FOR NETWORK SELECTION IN A RADIO ENVIRONMENT**
VERFAHREN ZUR NETZWERKAUSWAHL DURCH EINE MOBILSTATION IN EINER FUNKUMGEBUNG
PROCÉDÉ DE SÉLECTION DE RÉSEAU PAR UNE STATION MOBILE DANS UN ENVIRONNEMENT RADIO

(43) Date of publication of application: 05.02.2025
(73) Proprietor: Deutsche Telekom AG, 53113 Bonn (DE)
(72) Inventor: NEUBACHER, Andreas, 2100 Korneuburg (AT)
(74) Representative: Schwöbel, Thilo K.

(56) References cited:
- EP-A1- 3 893 557
- EP-A1- 4 002 923
- US-A1- 2007 275 717
- US-A1- 2016 242 111

## Description

### BACKGROUND

The present invention relates to a method for conducting network selection by a mobile station being in a radio environment comprising a plurality of available radio cells of a plurality of mobile communication networks, each one of these available radio cells being associated, respectively, to at least one mobile communication network of the plurality of mobile communication networks,
wherein the mobile station is related or associated to a home mobile communication network, and wherein, while being in the considered radio environment, the mobile station is able to measure or to detect reception conditions regarding the plurality of available radio cells.

Furthermore, the present invention relates to a mobile station for conducting network selection by a mobile station being in a radio environment comprising a plurality of available radio cells of a plurality of mobile communication networks, each one of these available radio cells being associated, respectively, to at least one mobile communication network of the plurality of mobile communication networks,
wherein the mobile station is related or associated to a home mobile communication network, and wherein, while being in the considered radio environment, the mobile station is able to measure or to detect reception conditions regarding the plurality of available radio cells.

Furthermore, the present invention relates to a system or to a mobile communication network for conducting network selection of a mobile station being in a radio environment comprising a plurality of available radio cells of a plurality of mobile communication networks, each one of these available radio cells being associated, respectively, to at least one mobile communication network of the plurality of mobile communication networks,
wherein, while being in the considered radio environment, the mobile station is able to measure or to detect reception conditions regarding the plurality of available radio cells.

Furthermore, the present invention relates to a program and to a computer-readable medium for conducting network selection by a mobile station being in a radio environment comprising a plurality of available radio cells of a plurality of mobile communication networks according to the inventive method.

Typically, a mobile communication network (or: cellular mobile communication network) comprises a plurality of radio cells (i.e., typically, a plurality of base station entities) at different geographical locations, thereby covering (or: providing radio coverage to) a certain geographical area.
In currently deployed mobile communication networks, a mobile station (typically a user equipment) - being located at a considered location - typically experiences a radio environment comprising a plurality of radio cells.
One such radio cell (of typically a plurality radio cells), 'seen' by the mobile station or user equipment, is normally provided by a base station entity, hence, in this case, the radio environment of the mobile station comprises the considered radio cell.
Typically, the plurality of radio cells of the radio environment of the mobile station are part of a plurality of mobile communication networks. Hence, by means of selecting a radio cell, the mobile station also selects a mobile communication network. However, before a mobile communication network is considered as a network selection candidate at all, the mobile station needs to find a suitable radio cell of a mobile communication network or public land mobile network to camp on. The criteria for a radio cell to be considered as suitable radio cell (to camp on), is dependent on the considered network technology (or radio access technology) being defined in or by means of the relevant standardization documents, mostly referred to 3GPP (third generation partnership project) documents.

The (initial) selection of a mobile network by a mobile station or user equipment (network selection after power-on of the device or loss of connection) is specified (among others) in TS 23.122 and TS 22.011 and is able to be summarized as follows:
-- the mobile station or user equipment does a frequency scan and measures the field-strength/quality of all possible mobile communication networks in the current location of the user equipment;
-- in case the measurement (results) of the user equipment for a certain mobile communication network (i.e. for a certain radio cell of such a mobile communication network) exceeds the threshold given by the respective network (e.g. RXLevMin, or S-Criteria) the mobile communication networks found are reported, by the access stratum, AS (especially as part of the user equipment or mobile station), to the upper layers for doing a so-called network selection.
Beside the field-strength/quality used in the initial phase(cf. 3GPP TS 23.122 section: 4.4.3 PLMN selection), additional criteria are applied before a certain mobile communication network is actually being selected.
Such additional criteria are, e.g., the "user preferred network list" ("User Controlled PLMN Selector with Access Technology"), the "operator preferred network list" ("Operator controlled PLMN Selector with Access Technology"), especially being stored on the USIM or universal integrated circuit card of the user equipment or mobile station. Especially the "operator preferred network list" are of particular importance for operators to apply "steering of roaming", i.e. the art of steering the user equipments into networks in view, e.g., to increase user experience and/or to provide a financial benefit for the network operator (of the home network of the user equipment) in case the user equipment is roaming. Since the related business relations are dynamic, respective lists on the USIM or universal integrated circuit card need to be kept up date as well. For such updates, special transport either by SMS or in 5G via NAS signaling and related special cryptographic methods have been developed to remotely maintain those lists on the USIM in the user equipment.
Beside the mentioned lists, additional criteria and procedures need to be obeyed by the user equipments, such as, e.g., additional criteria like selection of networks for disaster roaming or for selection of non-public network, NPN, for example in case of "campus networks".

However, this does not only involve an increased effort to maintain such information up to date (especially for an important number of such user equipments) but might also - especially in case that legacy user equipments are involved or concerned (whose hardware is either incompatible with such advanced without hardware replacements procedures or would, at least, require firmwares being updated) - be either very difficult to implement or even outright impossible.

Known methods of assisting individual mobile stations (or user equipments) include those in which self-learning techniques are applied to collect information that is deemed useful for network selection. This information is then sent to a network operator (e.g the serving or home network operator) in order to assist with network selection as described in US 2007/0275717 A1. However, the use of self-learning techniques by a mobile station may require considerable resources and it remains an open question how to realize a simple, effective and cost-effective transmission of the collected information.

### SUMMARY

An object of the present invention is to provide a technically simple, effective and cost-effective solution for conducting network selection by a mobile station being in a radio environment comprising a plurality of available radio cells of a plurality of mobile communication networks. A further object of the present invention is to provide a corresponding mobile station or user equipment, a corresponding system or a mobile communication network, and a corresponding program and computer-readable medium.

The object of the present invention is achieved by a method according to claim 1.

By means of providing the reception measurement data to the home mobile communication network of the user equipment or mobile station, it is advantageously possible to perform network selection at (or by) the home mobile communication network (in the sense that the home mobile communication network provides the network selection data to the mobile station or user equipment, and, on the basis of such network selection data, it is the mobile station or user equipment that actually performs the network selection); hence, according to the present invention, it is advantageously possible to realize network selection in a more flexible manner that might be more adapted to the specific situation or scenario of the user equipment or mobile station and/or more dynamically changing (i.e. such network selection procedures actually applied might be more up to date) and/or able to be applied even regarding legacy devices or hardware.

In conventionally known mobile communication networks, the currently applied network selection principle is able to be characterized by saying it is user equipment-based and steered by remotely provisioned parameters (i.e. parameters provided by the home mobile communication network).

As opposed thereto, according to the present invention, it is suggested to apply a different concept that provides a number of benefits, especially in terms of higher flexibility, an enhanced ability to adapt the network selection decisions to more rapidly changing parameters and/or roaming network environments (such as new roaming partners or new roaming partner agreements, being potentially dependent on dynamically changing network load parameters or the like). It would be highly cumbersome to repeatedly provide (or push) all such updated parameters to all user equipments or mobile stations related to (or assigned to) a considered home mobile communication network.
According to the present invention, the initial frequency scan for available (mobile communication) networks (i.e. whose radiofrequency signals, received by the user equipment or mobile station, exceed, e.g., RXLevMin, or S-criteria parameters or thresholds as specified, e.g., in 3GPP TS 36.304, 3GPP TS 25.304 and 3GPP TS 38.304) is also applied (or kept): Hence, upon a list of mobile communication networks and respective field-strength/quality values having been determined (as well as, especially, respective RXLevMin and/or S-criteria or parameters - provided by the respective visited public land mobile network (VPLMN) - detected by the user equipment or mobile station, especially as specified in 3GPP TS 36.304, 3GPP TS 25.304 and 3GPP TS 38.304) and, thus, being available (this corresponding to the first step according to the inventive method, during which the mobile station (or user equipment) generates reception measurement data based on measurements and/or detected or VPLMN-provided parameter information, such reception measurement data being indicative of the reception conditions regarding the plurality of available radio cells), such (field-strength/quality) values are signaled to the home public land mobile network. Such communication towards the home public land mobile network corresponds to the second step according to the inventive method, during which the mobile station (or user equipment) is provided with (preliminary) connectivity to (i.e. the possibility to communicate with (via other networks), not necessarily, typically, to be directly connected with) the home mobile communication network and transmits the reception measurement data to the home mobile communication network.
This advantageously provides the possibility that the home mobile communication network (also called, in the context of the present invention, home public land mobile network) - as a central entity - is able to apply new procedures or parameters much more efficiently compared to what is possible in conventionally known mobile communication networks.

According to the present invention, it is furthermore advantageously possible to potentially reduce overhead communication between the home mobile communication network and its associated user equipments or mobile stations: In order to keep the network selection parameter information up to date, it is no longer required that each and every user equipment or mobile station is provided with updated (and remotely provisioned) parameters for all potentially relevant regions or imaginable situations; on the contrary, a user equipment or a mobile station only needs to be provided with the relevant parameters that are need in its current situation or locations, or in adjacent locations. Hence, it is advantageously possible, according to the present invention, to potentially reduce overhead communication that would be required in order to provide each and every user equipment with the same level of updated and fitting parameter information.

According to the present invention, it is furthermore advantageously possible that - in case that new criteria for the network selection should be applied by the home mobile communication network (or HPLMN) - this can even be done for legacy user equipments or legacy mobile stations; thus, advantageously, users as well as operators (i.e. especially the network operator of the home mobile communication network) are not obliged to wait until the hardware of the user equipment or mobile station is replaced.

Furthermore advantageously according to the present invention, it is possible to realize or to apply more sophisticated and/or more dynamical steering procedures (by means of having the network selection process not purely autonomously performed by the user equipment or mobile station, but at least helped by the home mobile communication network) since there is more compute power and access to databases or even other data sources are much easier accessible for HPLMN core network entities compared to the user equipment or mobile station.

In the context of the present invention, the terms mobile station and user equipment are used more or less synonymously: a mobile station especially corresponds to a user equipment, i.e. comprising the mobile equipment with a USIM or UMTS (universal mobile telecommunications system) subscriber identity module, or a mobile equipment (especially in case that standalone non-public network are concerned)).

According to the present invention, it is advantageously possible and preferred that, as part of the second step and in order to be provided with connectivity to the home mobile communication network, the mobile station preliminarily registers with a preliminary radio cell of the available radio cells, the preliminary radio cell belonging to or being part of a preliminary mobile communication network, wherein the reception measurement data as well as the network selection data are transmitted and/or received using the preliminary mobile communication network,
wherein especially the mobile station performs this registration with the preliminary radio cell or with the preliminary mobile communication network independently from a user preferred network list information and/or an operator preferred network list information as stored on the mobile communication network and/or on an universal integrated circuit card of or associated with the mobile station.

It is thereby advantageously possible according to the present invention that the preliminary mobile communication network (and/or the preliminary radio cell) is used to transmit (by the mobile station or user equipment) the reception measurement data (to the home mobile communication network) and to receive (by the mobile station or user equipment) the network selection data (from the home mobile communication network). The choice of the preliminary mobile communication network might either be based on data stored in the mobile station or user equipment; however, alternatively, the mobile station might perform such (preliminary) registration with the preliminary radio cell or with the preliminary mobile communication network independently from a user preferred network list information and/or an operator preferred network list information.
In this respect, it might be especially advantageous for the mobile station or user equipment to minimize (electrical) power usage in order to get (or to be provided with) the preliminary connectivity.

According to the present invention, it is advantageously furthermore possible and preferred that a roaming agreement or arrangement exists, or is applied, between the preliminary mobile communication network and the home mobile communication network.

It is thereby advantageously possible to realize and implement the inventive method in a comparatively simple and efficient manner.
Especially, it might even be mandatory that the preliminary mobile communication network to which a user equipment or mobile station initially registers (during the second step of the inventive method) corresponds to a visited mobile communication network (or visited public land mobile network, VPLMN) that the home mobile communication network or HPLMN has a roaming agreement with. However subsequently (i.e. in the fourth step of the inventive method), the user equipment or mobile station may register to another mobile communication network based on the decision taken by the home mobile communication network or home public land mobile network.

According to the present invention, it is advantageously furthermore possible and preferred that, in case that, subsequent to the third step,
-- the selected radio cell differs from the preliminary radio cell, the mobile station deregisters from the preliminary radio cell, and/or
-- the selected mobile communication network differs from the preliminary mobile communication network, the mobile station deregisters from the preliminary mobile communication network.

It is thereby advantageously possible to realize and implement the inventive method in a comparatively simple and efficient manner.

According to the present invention, it is furthermore advantageously possible and preferred that the reception measurement data comprises a list information comprising a reference information indicating the available radio cells and/or indicating their respective mobile communication networks, as well as, regarding each such available radio cell and/or regarding each such mobile communication networks, respectively, at least one out of the following:
-- a measured field strength value, especially a reference signals received power, RSRP, value, RSSI Received Signal Strength Indicator,
-- a quality value,
-- a geo location if available and accessible,
-- available cell identifier, location area identifier or tracking area identifier,
-- parts or all parameter broadcasted via SIB, System Information Broadcast,(especially according to 3GPP TS 25.331, TS 36.331 und TS 38.331) on the cellular network of the actual serving cell as well as from possibly measured neighbor cells
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

It is thereby advantageously possible to realize and implement the inventive method in a comparatively simple and efficient manner.

According to the present invention, it is furthermore advantageously possible and preferred that, after the mobile station having preliminarily registered with the preliminary radio cell or the preliminary mobile communication network, the mobile station receives, via the preliminary radio cell and/or via the preliminary mobile communication network, the network selection data, wherein the network selection data comprises
-- indicator information pointing to the mobile communication network to be selected by the mobile station, and/or
-- a list of mobile communication networks in priority order, the mobile station shall select and register with,
wherein the network selection data is generated in the home mobile communication network of the mobile station, especially considering the reception measurement data as well as preferred roaming partners and possible other priorities.

By means of the home mobile communication network providing the network selection data such as to comprise indicator information pointing to the mobile communication network to be selected by the mobile station and/or a list of mobile communication networks in priority order that the mobile station shall select and register with, it is advantageously possible according to the present invention to be able to flexibly indicate, to the mobile station or user equipment, which mobile communication network shall be the selected mobile communication network. This especially and advantageously provides the possibility to clearly and firmly indicate, to the mobile station or user equipment, which mobile communication network shall be used as the selected mobile communication network; however - especially in case of the mobile station or user equipment being mobile and moving with a certain velocity - the radio environment of the user equipment or mobile station is susceptible of changes, in which cases it might as well be advantageous to provide, as part of the network selection data, a list of mobile communication networks in priority order which the mobile station shall select.

According to the present invention, it is furthermore advantageously possible and preferred that network selection is conducted, by the home mobile communication network, based on the reception measurement data provided by the mobile station and received by the home mobile communication network, wherein the network selection data comprise an indication to the selected radio cell and/or to the selected mobile communication network.

It is thereby advantageously possible to realize and implement the inventive method in a comparatively simple and efficient manner, and especially to provide the user equipment or mobile station with a firm indication which mobile communication network to select.

Furthermore, the present invention relates to a mobile station according to claim 7..

Furthermore, the present invention relates to a system or to a mobile communication network according to claim 8.

Additionally, the present invention relates to a program according to claim 9.

Still additionally, the present invention relates to a computer-readable medium according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

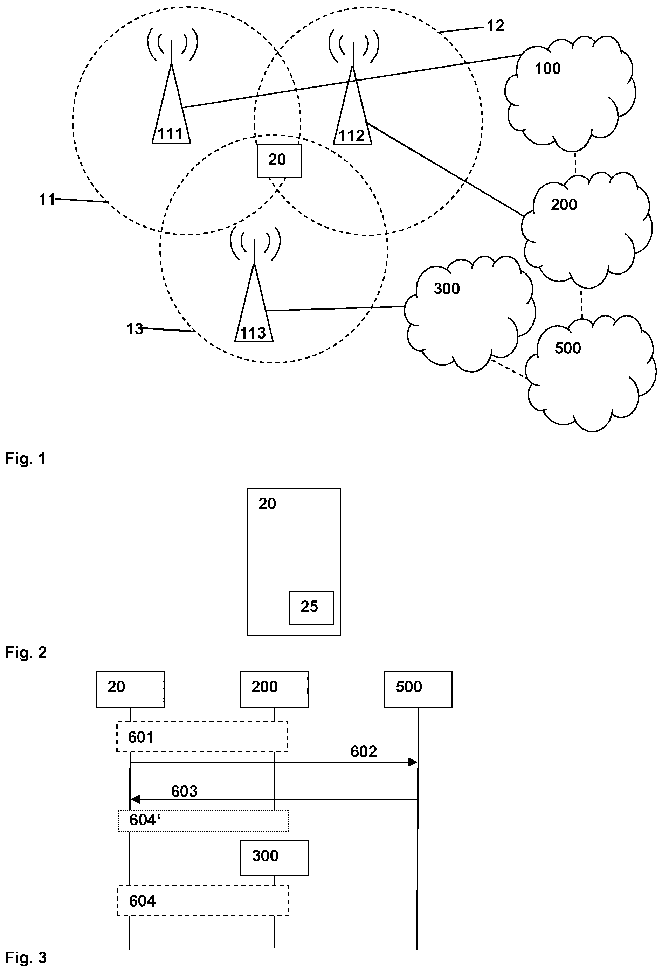

Figure 1 schematically illustrates a mobile station in a radio environment comprising a plurality of available radio cells of a plurality of mobile communication networks, each one of these available radio cells being associated, respectively, to at least one mobile communication network of the plurality of mobile communication networks, wherein the mobile station is related or associated to a home mobile communication network and able to measure or to detect reception conditions regarding the plurality of available radio cells.
Figure 2 schematically illustrates the mobile station comprising network selection data, especially stored in a memory module of the mobile station, typically the USIM or the universal integrated circuit card in case of the mobile station being a user equipment, or in another memory portion of the mobile equipment / mobile station.
Figure 3 schematically illustrates an example of a communication between the mobile station (or user equipment) on the one hand and its home mobile communication network on the other hand.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile station 20 (or user equipment 20) is schematically illustrated in a radio environment comprising a plurality of radio cells that are available to (i.e. physically reachable by) that considered mobile station or user equipment 20, the plurality of such (available) radio cells being of a plurality of mobile communication networks (or, each one of these available radio cells being associated, respectively, to at least one mobile communication network of the plurality of mobile communication networks). In the exemplary representation of Figure 1, a first radio cell 11 is associated with or related to a first mobile communication network 100, a second radio cell 12 is associated with or related to a second mobile communication network 200, and a third radio cell 13 is associated with or related to a third mobile communication network 300. The mobile station 20 or user equipment 20 is related or associated to a home mobile communication network 500 (or home public land mobile network 500) and is furthermore able to measure or to detect reception conditions regarding the plurality of available radio cells 11, 12, 13.

Schematically, a base station entity is represented regarding each one of the three available radio cells 11, 12, 13 that the mobile station 20 detects or "sees": A first base station entity 111 (typically but not necessarily of the first mobile communication network 100) generates or provides radio coverage of or regarding the first radio cell 11, a second base station entity 112 (typically but not necessarily of the second mobile communication network 200) generates or provides radio coverage of or regarding the second radio cell 12, and a third base station entity 113 (typically but not necessarily of the third mobile communication network 200) generates or provides radio coverage of or regarding the third radio cell 13.

In Figure 1, the mobile station 20 is shown being located within the radio coverage area (illustrated by means of dashed circles) of the first radio cell 11, the second radio cell 12, as well as the third radio cell 13. The mobile station 20 typically measures or detects reception conditions regarding the plurality of available radio cells 11, 12, 13, and subsequently selects and/or registers to a mobile communication network out of the plurality of mobile communication networks 100, 200, 300.

According to the present invention, it is supposed that the mobile station 20 (especially a user equipment, i.e. comprising the mobile equipment with a USIM or subscriber identity module, or a mobile equipment) is located in a radio environment, i.e. at the location of the mobile station 20 or user equipment 20 a plurality of mobile communication networks 100, 200, 300 are able to be received (by the mobile station 20 or user equipment 20). In addition, the mobile station 20 (or user equipment 20) is related or associated to the home mobile communication network 500, and it is able to measure or to detect reception conditions regarding the plurality of available radio cells 11, 12, 13 (of mobile communication networks 100, 200, 300).
In order to conduct network selection according to the present invention, the user equipment 20 or mobile station 20 first measures or detects the reception conditions of or regarding its radio environment, i.e. in the exemplary situation schematically illustrated in Figure 1, the plurality of available radio cells 11, 12, 13 and, based thereon, generates reception measurement data. After having generated the reception measurement data, the mobile station 20 or user equipment 20 transmits the reception measurement data to the (or its) home mobile communication network 500.
It is evident, that - in order to be able to transmit some data (here: the reception measurement data) to its home mobile communication network 500 - the mobile station 20 or user equipment 20 needs to be provided, at least somehow, with some kind of (typically wireless) connectivity. However, according to the present invention, it is almost irrelevant which kind of (wireless) connectivity is provided to the mobile station 20 or user equipment 20 and using which (radio access) technology - the only condition needed to be verified is to be able to exchange data with the home mobile communication network 500. After having transmitted the reception measurement data to the home mobile communication network 500, the mobile station 20 or user equipment 20 receives network selection data from the home mobile communication network 500, and - especially using the network selection data received from the home mobile communication network 500 - registers with a selected radio cell of the available radio cells 11, 12, 13 belonging to or being part of a selected mobile communication network, the selected mobile communication network being one of the available mobile communication networks 100, 200, 300.

In Figure 2, the mobile station 20 (or user equipment 20) is schematically shown comprising network selection data 25. The network selection data 25 might either be statically stored in a memory module of the mobile station 20, typically the USIM or the universal integrated circuit card in case of the mobile station 20 being a user equipment 20, or in another memory portion of the mobile equipment / mobile station. Alternatively, the network selection data 25 are received from the home public land mobile network 500 or home mobile communication network 500 of the user equipment 20 or mobile station 20.

In Figure 3, an example of a communication between the mobile station 20 (or user equipment 20) on the one hand and its home mobile communication network 500 on the other hand is schematically and exemplarily shown, illustrating the above mentioned inventive method: According to the representation of Figure 3, the user equipment 20 or the mobile station 20 - considered to be located in a specific radio environment, e.g. according to the representation of Figure 1, i.e. comprising the first, second and third mobile communication network 100, 200, 300 (which radio environment is, however, not represented in Figure 3), and, especially, after being switched on or after recovery from loss of (radio) coverage - measures or detects the reception conditions of or regarding its radio environment, i.e. the plurality of available radio cells 11, 12, 13, and, based thereon, generates reception measurement data (corresponding to the first step according to the method of the present invention). In a first processing step 601, the user equipment 20 or mobile station 20 is provided with connectivity - exemplarily using the second mobile communication network 200 -, and in a second processing step 602, the mobile station 20 (or user equipment 20) transmits the (previously generated) reception measurement data to its home mobile communication network 500 (both the first and second processing steps 601, 602 correspond to the second step according to the method of the present invention). In a third processing step 603, the mobile station 20 (or user equipment 20) receives network selection data from the home mobile communication network 500. Especially based on, or using, such network selection data (received from the home mobile communication network 500), the user equipment 20 or mobile station 20 registers - in a fourth processing step 604 - with a selected radio cell of the available radio cells 11, 12, 13 belonging to or being part of a selected mobile communication network; in the exemplarily represented scenario shown in Figure 3, the selected mobile communication network corresponds to the third mobile communication network 300.

As already stated, in order for the mobile station 20 or user equipment 20 to be able to transmit the reception measurement data to the home mobile communication network 500, it needs to be provided with some kind of - especially (but not necessarily) wireless - connectivity, or preliminary connectivity, which is provided, in the exemplary situation shown in Figure 3, by the second mobile communication network 200. However, which kind of (preliminary) connectivity is used to transmit the reception measurement data (towards the home mobile communication network 500; as well as receive the network selection data from the home mobile communication network 500) is of little importance according to the present invention; hence, in case such (preliminary) connectivity is able to be provided without a proper registration (in the exemplary situation represented in Figure 3: at the second mobile communication network 200) and/or by means of using other (especially lesser) kinds of registrations (i.e. compared to proper registrations of a user equipment 20 or mobile station 20 with a mobile communication network) - such as, e.g., using wireless access points (using WLAN or Wifi-technology) and/or registrations that are aimed rather at machine type communication-oriented devices -, this might fit as well.
Hence, according to the present invention, as part of the second step and in order to be provided with (preliminary) connectivity to the home mobile communication network 500, the mobile station 20 preliminarily registers with a preliminary radio cell of the available radio cells 11, 12, 13, the preliminary radio cell (in the example represented in Figure 3, the second radio cell 12) belonging to or being part of a preliminary mobile communication network (in the example represented in Figure 3, the second mobile communication network 200), wherein the reception measurement data as well as the network selection data are transmitted and/or received using the preliminary mobile communication network. The choice of the preliminary mobile communication network might either be based on data stored in the mobile station or user equipment 20 (such as user preferred network list information and/or operator preferred network list information as stored on a universal integrated circuit card of or associated with the mobile station 20); however, alternatively, the mobile station 20 might perform such (preliminary) registration with the preliminary radio cell or with the preliminary mobile communication network independently from a user preferred network list information and/or an operator preferred network list information as stored on an universal integrated circuit card of or associated with the mobile station 20.

After the mobile station 20 or user equipment 20 having received - in the third processing step 603 - the network selection data from the home mobile communication network 500, the user equipment 20 or mobile station 20 is able to perform (in the fourth processing step 604) its (proper or, rather, definitive) registration with the selected one of the available radio cells 11, 12, 13, i.e. with the third mobile communication network 300 as the selected mobile communication network (as indicated by the network selection data obtained from the home mobile communication network 500).
Of course, it might very well be the case that the result of the preliminary network selection and the result of the definitive network selection corresponds to one and the same mobile communication network (i.e. the preliminary mobile communication network, providing the preliminary connectivity, is the same as the selected mobile communication network) - in the representation of Figure 3, this would mean that instead of the fourth processing step 604 (represented as a dashed box), the alternative fourth processing step 604' (represented as a dotted box) would (have to) be performed: In such a scenario, in case that - in the second step of the inventive method - the registration with the preliminary mobile communication network (in order to provide the mobile station or user equipment 20 with connectivity) corresponds to a proper (or definitive) registration, the fourth step and the second step of the inventive method are performed, at least partly, in parallel; however, if, alternatively, in the second step of the inventive method, the registration with the preliminary mobile communication network (in order to provide the mobile station or user equipment 20 with connectivity) corresponds to only a preliminary or lesser (kind of) registration, in the fourth step (of the inventive method) the mobile station or user equipment 20 definitively registers with the selected mobile communication network.

## Claims

1. Method for conducting network selection by a mobile station (20) being in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the mobile station (20) is related or associated to a home mobile communication network (500), and wherein, while being in the radio environment, the mobile station (20) is able to measure or to detect reception conditions regarding the plurality of available radio cells (11, 12, 13),
wherein, in order to conduct network selection, the method comprises the following steps:
-- in a first step, the mobile station (20) measures or detects the reception conditions regarding the plurality of available radio cells (11, 12, 13) and, based thereon, generates reception measurement data,
-- in a second step, the mobile station (20) is provided with connectivity to the home mobile communication network (500) and transmits the reception measurement data to the home mobile communication network (500),
-- in a third step, the mobile station (20) receives network selection data, from the home mobile communication network (500),
-- in a fourth step, using the network selection data received from the home mobile communication network (500) the mobile station (20) registers with a selected radio cell of the available radio cells (11, 12, 13) belonging to or being part of a selected mobile communication network,
wherein, as part of the second step and in order to be provided with connectivity to the home mobile communication network (500), the mobile station (20) preliminarily registers with a preliminary radio cell of the available radio cells (11, 12, 13), the preliminary radio cell belonging to or being part of a preliminary mobile communication network, wherein the reception measurement data as well as the network selection data are transmitted and/or received using the preliminary mobile communication network.

2. Method according to claim 1, wherein a roaming agreement or arrangement exists, or is applied, between the preliminary mobile communication network and the home mobile communication network.

3. Method according to one of the preceding claims, wherein, in case that, subsequent to the third step, the selected radio cell differs from the preliminary radio cell, the mobile station deregisters from the preliminary radio cell, and/or in case that the selected mobile communication network differs from the preliminary mobile communication network, the mobile station deregisters from the preliminary mobile communication network.

4. Method according to one of the preceding claims, wherein the reception measurement data comprises a list information comprising a reference information indicating the available radio cells (11, 12, 13) and/or indicating their respective mobile communication networks (100, 200, 300), as well as, regarding each such available radio cell (11, 12, 13) and/or regarding each such mobile communication networks (100, 200, 300), respectively, at least one out of the following:
-- a measured field strength value
-- a reference signals received power, RSRP, value
-- a RSSI Received Signal Strength Indicator,
-- a quality value,
-- a geo location if available and accessible,
-- available cell identifier, location area identifier or tracking area identifier,
-- parts or all parameter broadcasted via SIB, System Information Broadcast,) on the cellular network of the actual serving cell as well as from possibly measured neighbor cells
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

5. Method according to one of the preceding claims, wherein, after the mobile station (20) having preliminarily registered with the preliminary radio cell or the preliminary mobile communication network, the mobile station (20) receives, via the preliminary radio cell and/or via the preliminary mobile communication network, the network selection data, wherein the network selection data comprises
-- indicator information pointing to the mobile communication network to be selected by the mobile station (20), or
-- a list of mobile communication networks in priority order, the mobile station (20) shall select and register with,
wherein the network selection data is generated, especially considering the reception measurement data as well as preferred roaming partners and possible other priorities, in the home mobile communication network of the mobile station (20).

6. Method according to one of the preceding claims, wherein network selection is conducted, by the home mobile communication network, based on the reception measurement data provided by the mobile station (20) and received by the home mobile communication network, wherein the network selection data comprise an indication to the selected radio cell and/or to the selected mobile communication network.

7. Mobile station (20) for conducting network selection, the mobile station (20) being in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the mobile station (20) is related or associated to a home mobile communication network (500), and wherein, while being in the radio environment, the mobile station (20) is able to measure or to detect reception conditions regarding the plurality of available radio cells (11, 12, 13),
wherein, in order to conduct network selection, the mobile station (20) is configured such that:
-- the mobile station (20) measures or detects the reception conditions regarding the plurality of available radio cells (11, 12, 13) and, based thereon, generates reception measurement data,
-- the mobile station (20) transmits the reception measurement data to the home mobile communication network (500),
-- the mobile station (20) receives network selection data, from the home mobile communication network (500),
-- using the network selection data received from the home mobile communication network (500) the mobile station (20) registers with a selected radio cell of the available radio cells (11, 12, 13) belonging to or being part of a selected mobile communication network,
wherein, in order to be provided with connectivity to the home mobile communication network (500), the mobile station (20) is further configured such that the mobile station (20) preliminarily registers with a preliminary radio cell of the available radio cells (11, 12, 13), the preliminary radio cell belonging to or being part of a preliminary mobile communication network, wherein the reception measurement data as well as the network selection data are transmitted and/or received using the preliminary mobile communication network.

8. System or mobile communication network for conducting network selection of a mobile station (20) the system or mobile communication network comprising the mobile station (20), the mobile station (20) being in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the system or mobile communication network is configured to act as home mobile communication network (500) for or regarding the mobile station (20), and wherein, while being in the radio environment, the mobile station (20) is able to measure or to detect reception conditions regarding the plurality of available radio cells (11, 12, 13),
wherein, in order to conduct network selection, the system or mobile communication network is configured such that:
-- the home mobile communication network (500) receives reception measurement data, generated by the mobile station (20) based on the mobile station (20) measuring or detecting reception conditions regarding the plurality of available radio cells (11, 12, 13),
-- the home mobile communication network (500) transmits network selection data to the mobile station (20), and
-- using the network selection data received from the home mobile communication network (500) a registration occurs of the mobile station (20) with a selected radio cell of the available radio cells (11, 12, 13) belonging to or being part of a selected mobile communication network,
wherein, in order to be provided with connectivity to the home mobile communication network (500), the mobile station (20) is configured to preliminary register with a preliminary radio cell of the available radio cells (11, 12, 13), the preliminary radio cell belonging to or being part of a preliminary mobile communication network, wherein the reception measurement data as well as the network selection data are transmitted and/or received using the preliminary mobile communication network.

9. Program comprising a computer readable program code, which, when executed on a mobile station (20), causes the mobile station (20) to perform a method according one of claims 1 to 6.

10. Computer-readable medium comprising instructions which when executed on a mobile station (20), causes mobile station (20) to perform a method according one of claims 1 to 6.

## Patentansprüche

1. Verfahren zur Durchführung einer Netzauswahl durch eine Mobilstation (20), die sich in einer Funkumgebung befindet, die eine Vielzahl von verfügbaren Funkzellen (11, 12, 13) einer Vielzahl von Mobilfunkkommunikationsnetzen (100, 200, 300) umfasst, wobei jede dieser verfügbaren Funkzellen (11, 12, 13) jeweils mindestens einem Mobilfunkkommunikationsnetz der mehreren Mobilfunkkommunikationsnetze (100, 200, 300) zugeordnet ist, wobei die Mobilstation (20) einem Heimat-Mobilfunkkommunikationsnetz (500) zugeordnet oder mit diesem verbunden ist, und wobei die Mobilstation (20) in der Funkumgebung Empfangsbedingungen bezüglich der mehreren verfügbaren Funkzellen (11, 12, 13) messen oder erfassen kann, wobei das Verfahren zur Durchführung einer Netzauswahl die folgenden Schritte umfasst:
-- in einem ersten Schritt misst oder ermittelt die Mobilstation (20) die Empfangsbedingungen bezüglich der mehreren verfügbaren Funkzellen (11, 12, 13) und erzeugt auf dieser Grundlage Empfangsmessdaten,
-- in einem zweiten Schritt wird die Mobilstation (20) mit dem Heimat-Mobilfunkkommunikationsnetz (500) verbunden und überträgt die Empfangsmessdaten an das Heimat-Mobilfunkkommunikationsnetz (500),
-- in einem dritten Schritt empfängt die Mobilstation (20) Netzauswahldaten von dem Heimat-Mobilfunkkommunikationsnetz (500),
-- in einem vierten Schritt registriert die Mobilstation (20) unter Verwendung der von dem Heimat-Mobilfunkkommunikationsnetz (500) empfangenen Netzauswahldaten sich bei einer ausgewählten Funkzelle der verfügbaren Funkzellen (11, 12, 13), die zu einem ausgewählten Mobilfunkkommunikationsnetz gehören oder Teil davon sind, wobei die Mobilstation (20), als Teil des zweiten Schritts und um mit dem Heimat-Mobilfunkkommunikationsnetz (500) verbunden zu sein (500), sich vorläufig mit einer vorläufigen Funkzelle der verfügbaren Funkzellen (11, 12, 13) registriert, wobei die vorläufige Funkzelle zu einem vorläufigen Mobilfunkkommunikationsnetz gehört oder Teil davon ist, wobei die Empfangsmessdaten sowie die Netzauswahldaten über das vorläufige Mobilfunkkommunikationsnetz übertragen und/oder empfangen werden.

2. Verfahren nach Anspruch 1, wobei zwischen dem vorläufigen Mobilfunkkommunikationsnetz und dem Heimat-Mobilfunkkommunikationsnetz eine Roaming-Vereinbarung oder -Regelung besteht oder angewendet wird.

3. Verfahren nach einem der vorstehenden Ansprüche, wobei in dem Fall, dass nach dem dritten Schritt die ausgewählte Funkzelle von der vorläufigen Funkzelle abweicht, die Mobilstation sich von der vorläufigen Funkzelle abmeldet, und/oder in dem Fall, dass das ausgewählte Mobilfunkkommunikationsnetz von dem vorläufigen Mobilfunkkommunikationsnetz abweicht, die Mobilstation sich von dem vorläufigen Mobilfunkkommunikationsnetz abmeldet.

4. Verfahren nach einem der vorstehenden Ansprüche, wobei die Empfangsmessdaten eine Listeninformation umfassen, die eine Referenzinformation enthält, die die verfügbaren Funkzellen (11, 12, 13) und/oder deren jeweilige Mobilfunkkommunikationsnetze (100, 200, 300) angibt, sowie für jede solche verfügbare Funkzelle (11, 12, 13) und/oder zu jedem dieser Mobilfunkkommunikationsnetze (100, 200, 300) mindestens eines der folgenden Elemente:
-- einen gemessenen Feldstärkewert
-- einen Empfangslistwert RSRP für Referenzsignale
-- einen RSSI-Empfangssignalstärkeindikator,
-- einen Qualitätswert,
-- einen Geo-Standort, eine verfügbare Zellenkennung, Standortbereichskennung oder Verfolgungsbereichskennung,
-- Teile oder alle Parameter, die über SIB, System Information Broadcast, im Mobilfunknetz der tatsächlich bedienenden Zelle sowie von möglicherweise gemessenen Nachbarzellen gesendet werden
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

5. Verfahren nach einem der vorstehenden Ansprüche, wobei nach der vorläufigen Registrierung der Mobilstation (20) bei der vorläufigen Funkzelle oder dem vorläufigen Mobilfunkkommunikationsnetz die Mobilstation (20) über die vorläufige Funkzelle und/oder über das vorläufige Mobilfunkkommunikationsnetz die Netzauswahldaten empfängt, wobei die Netzauswahldaten umfassen
-- Indikatorinformationen, die auf das von der Mobilstation (20) auszuwählende Mobilfunkkommunikationsnetz hinweisen, oder
-- eine Liste von Mobilfunkkommunikationsnetzen in Prioritätsreihenfolge, die die Mobilstation (20) auswählt und bei der sie sich anmeldet, wobei die Netzauswahldaten im Heimat-Mobilfunkkommunikationsnetz der Mobilstation (20) erzeugt werden, insbesondere unter Berücksichtigung der Empfangsmessdaten sowie bevorzugter Roamingpartner und möglicher weiterer Prioritäten.

6. Verfahren nach einem der vorstehenden Ansprüche, wobei die Netzauswahl durch das Heimat-Mobilfunkkommunikationsnetz auf der Grundlage der von der Mobilstation (20) bereitgestellten und vom Heimat-Mobilfunkkommunikationsnetz empfangenen Empfangsmessdaten durchgeführt wird, wobei die Netzauswahldaten einen Hinweis an die ausgewählte Funkzelle und/oder an das ausgewählte Mobilfunkkommunikationsnetz umfassen.

7. Mobilstation (20) zur Durchführung einer Netzauswahl, wobei sich die Mobilstation (20) in einer Funkumgebung befindet, die eine Vielzahl von verfügbaren Funkzellen (11, 12, 13) einer Vielzahl von Mobilfunkkommunikationsnetzen (100, 200, 300) umfasst, wobei jede dieser verfügbaren Funkzellen (11, 12, 13) jeweils mindestens einem der Vielzahl von Mobilfunkkommunikationsnetzen (100, 200, 300) zugeordnet ist, , wobei die Mobilstation (20) einem Heimat-Mobilfunkkommunikationsnetz (500) zugeordnet ist, und wobei die Mobilstation (20) in der Funkumgebung in der Lage ist, Empfangsbedingungen bezüglich der mehreren verfügbaren Funkzellen (11, 12, 13) zu messen oder zu erfassen, wobei die Mobilstation (20) zur Durchführung einer Netzauswahl so konfiguriert ist, dass
-- die Mobilstation (20) die Empfangsbedingungen bezüglich der mehreren verfügbaren Funkzellen (11, 12, 13) misst oder ermittelt und auf dieser Grundlage Empfangsmessdaten erzeugt,
-- die Mobilstation (20) die Empfangsmessdaten an das Heimat-Mobilfunkkommunikationsnetz (500) überträgt,
-- die Mobilstation (20) Netzauswahldaten von dem Heimat-Mobilfunkkommunikationsnetz (500) empfängt,
-- die Mobilstation (20) unter Verwendung der von dem Heimat-Mobilfunkkommunikationsnetz (500) empfangenen Netzauswahldaten sich bei einer ausgewählten Funkzelle der verfügbaren Funkzellen (11, 12, 13) registriert, die zu einem ausgewählten Mobilkommunikationsnetz gehört oder Teil davon ist, wobei, um mit dem Heimat-Mobilfunkkommunikationsnetz (500) verbunden zu sein, die Mobilstation (20) ferner so konfiguriert ist, dass die Mobilstation (20) sich vorab bei einer vorläufigen Funkzelle der verfügbaren Funkzellen (11, 12, 13) registriert, wobei die vorläufige Funkzelle zu einem vorläufigen Mobilfunkkommunikationsnetz gehört oder Teil davon ist, wobei die Empfangsmessdaten sowie die Netzauswahldaten unter Verwendung des vorläufigen Mobilfunkkommunikationsnetzes übertragen und/oder empfangen werden.

8. System oder Mobilfunkkommunikationsnetz zur Durchführung einer Netzauswahl einer Mobilstation (20), wobei das System oder Mobilfunkkommunikationsnetz die Mobilstation (20) umfasst, wobei sich die Mobilstation (20) in einer Funkumgebung befindet, die eine Vielzahl von verfügbaren Funkzellen (11, 12, 13) einer Vielzahl von Mobilfunknetzen (100, 200, 300) umfasst, wobei jede dieser verfügbaren Funkzellen (11, 12, 13) jeweils mindestens einem Mobilfunkkommunikationsnetz der mehreren Mobilfunkkommunikationsnetze (100, 200, 300) zugeordnet ist, wobei das System oder Mobilfunkkommunikationsnetz so konfiguriert ist, dass es als Heimat-Mobilfunkkommunikationsnetz (500) für oder in Bezug auf die Mobilstation (20) fungiert (20) fungiert, und wobei die Mobilstation (20) in der Funkumgebung Empfangsbedingungen bezüglich der mehreren verfügbaren Funkzellen (11, 12, 13) messen oder erfassen kann, wobei das System oder Mobilfunkkommunikationsnetz zur Durchführung einer Netzauswahl so konfiguriert ist, dass
-- das Heimat-Mobilfunkkommunikationsnetz (500) Empfangsmessdaten empfängt, die von der Mobilstation (20) auf der Grundlage der Messung oder Erfassung von Empfangsbedingungen bezüglich der mehreren verfügbaren Funkzellen (11, 12, 13) durch die Mobilstation (20) erzeugt werden,
-- das Heimat-Mobilfunkkommunikationsnetz (500) Netzauswahldaten an die Mobilstation (20) überträgt, und
-- unter Verwendung der vom Heimat-Mobilfunkkommunikationsnetz (500) empfangenen Netzauswahldaten eine Registrierung der Mobilstation (20) bei einer ausgewählten Funkzelle der verfügbaren Funkzellen (11, 12, 13) erfolgt, die zu einem ausgewählten Mobilfunkkommunikationsnetz gehören oder Teil davon sind, wobei, um mit dem Heimat-Mobilfunkkommunikationsnetz (500) verbunden zu sein, die Mobilstation (20) so konfiguriert ist, dass sie sich bei einer vorläufigen Funkzelle der verfügbaren Funkzellen (11, 12, 13) vorläufig registriert, wobei die vorläufige Funkzelle zu einem vorläufigen Mobilfunkkommunikationsnetz gehört oder Teil davon ist, wobei die Empfangsmessdaten sowie die Netzauswahldaten unter Verwendung des vorläufigen Mobilfunkkommunikationsnetzes übertragen und/oder empfangen werden.

9. Programm, das einen computerlesbaren Programmcode umfasst, der, wenn er auf einer Mobilstation (20) ausgeführt wird, die Mobilstation (20) veranlasst, ein Verfahren gemäß einem der Ansprüche 1 bis 6 auszuführen.

10. Computerlesbares Medium, das Anweisungen umfasst, die, wenn sie auf einer Mobilstation (20) ausgeführt werden, die Mobilstation (20) veranlassen, ein Verfahren gemäß einem der Ansprüche 1 bis 6 auszuführen.

## Revendications

1. Procédé pour effectuer une sélection de réseau par une station mobile (20) se trouvant dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300), dans lequel la station mobile (20) est liée ou associée à un réseau de communication mobile domestique (500), et dans lequel, tout en se trouvant dans l'environnement radio, la station mobile (20) est capable de mesurer ou de détecter des conditions de réception concernant la pluralité de cellules radio disponibles (11, 12, 13), dans lequel, afin d'effectuer la sélection de réseau, le procédé comprend les étapes suivantes :
-- dans une première étape, la station mobile (20) mesure ou détecte les conditions de réception concernant la pluralité de cellules radio disponibles (11, 12, 13) et, sur cette base, génère des données de mesure de réception,
-- dans une deuxième étape, la station mobile (20) est connectée au réseau de communication mobile domestique (500) et transmet les données de mesure de réception au réseau de communication mobile domestique (500),
-- dans une troisième étape, la station mobile (20) reçoit des données de sélection de réseau du réseau de communication mobile domestique (500),
-- dans une quatrième étape, la station mobile (20) s'enregistre, à l'aide des données de sélection de réseau reçues du réseau de communication mobile domestique (500), auprès d'une cellule radio sélectionnée des cellules radio disponibles (11, 12, 13) appartenant à un réseau de communication mobile sélectionné ou faisant partie de celui-ci,
dans lequel la station mobile (20) s'enregistre, dans le cadre de la deuxième étape et afin d'être mise en liaison avec le réseau de communication mobile domestique (500), la station mobile (20) s'enregistre préalablement auprès d'une cellule radio préliminaire des cellules radio disponibles (11, 12, 13), la cellule radio préliminaire appartenant à ou faisant partie d'un réseau de communication mobile préliminaire, dans lequel les données de mesure de réception ainsi que les données de sélection de réseau sont transmises et/ou reçues en utilisant le réseau de communication mobile préliminaire.

2. Procédé selon la revendication 1, dans lequel un accord ou une disposition d'itinérance existe ou est appliqué entre le réseau de communication mobile préliminaire et le réseau de communication mobile domestique.

3. Procédé selon l'une des revendications précédentes, dans lequel, dans le cas où, après la troisième étape, la cellule radio sélectionnée diffère de la cellule radio préliminaire, la station mobile se désenregistre de la cellule radio préliminaire, et/ou dans le cas où le réseau de communication mobile sélectionné diffère du réseau de communication mobile préliminaire, la station mobile se désenregistre du réseau de communication mobile préliminaire.

4. Procédé selon l'une des revendications précédentes, dans lequel les données de mesure de réception comprennent des informations de liste comprenant des informations de référence indiquant les cellules radio disponibles (11, 12, 13) et/ou indiquant leurs réseaux de communication mobile respectifs (100, 200, 300), ainsi que, concernant chacune de ces cellules radio disponibles (11, 12, 13) et/ou concernant chacun de ces réseaux de communication mobile (100, 200, 300), respectivement, au moins l'un des éléments suivants :
-- une valeur de champ mesurée
-- une valeur de puissance reçue des signaux de référence, RSRP
-- une valeur d'indicateur d'intensité de signal reçu RSSI,
-- une valeur de qualité,
-- une géolocalisation si disponible et accessible,
-- un identifiant de cellule disponible, un identifiant de zone de localisation ou un identifiant de zone de suivi,
-- tout ou partie des paramètres diffusés via SIB, System Information Broadcast, sur le réseau cellulaire de la cellule de desserte réelle ainsi que depuis des cellules voisines éventuellement mesurées
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

5. Procédé selon l'une des revendications précédentes, dans lequel, après que la station mobile (20) s'est préalablement enregistrée auprès de la cellule radio préliminaire ou du réseau de communication mobile préliminaire, la station mobile (20) reçoit, via la cellule radio préliminaire et/ou via le réseau de communication mobile préliminaire, les données de sélection de réseau, dans lequel les données de sélection de réseau comprennent
-- des informations d'indicateur renvoyant au réseau de communication mobile à sélectionner par la station mobile (20), ou
-- une liste de réseaux de communication mobile classés par ordre de priorité, parmi lesquels la station mobile (20) doit sélectionner et s'enregistrer, les données de sélection de réseau étant générées, dans le réseau de communication mobile domestique de la station mobile (20), en tenant compte notamment des données de mesure de réception ainsi que des partenaires d'itinérance préférés et d'autres priorités éventuelles.

6. Procédé selon l'une des revendications précédentes, dans lequel la sélection de réseau est effectuée par le réseau de communication mobile domestique sur la base des données de mesure de réception fournies par la station mobile (20) et reçues par le réseau de communication mobile domestique, les données de sélection de réseau comprenant une indication à la cellule radio sélectionnée et/ou au réseau de communication mobile sélectionné.

7. Station mobile (20) pour effectuer une sélection de réseau, la station mobile (20) se trouvant dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300), dans laquelle la station mobile (20) est liée ou associée à un réseau de communication mobile domestique (500), et dans laquelle, tout en se trouvant dans l'environnement radio, la station mobile (20) est capable de mesurer ou de détecter des conditions de réception concernant la pluralité de cellules radio disponibles (11, 12, 13), dans laquelle, afin d'effectuer la sélection de réseau, la station mobile (20) est configurée de telle sorte que :
-- la station mobile (20) mesure ou détecte les conditions de réception concernant la pluralité de cellules radio disponibles (11, 12, 13) et, sur cette base, génère des données de mesure de réception,
-- la station mobile (20) transmet les données de mesure de réception au réseau de communication mobile domestique (500),
-- la station mobile (20) reçoit des données de sélection de réseau du réseau de communication mobile domestique (500),
-- la station mobile (20) s'enregistre, à l'aide des données de sélection de réseau reçues du réseau de communication mobile domestique (500), auprès d'une cellule radio sélectionnée parmi les cellules radio disponibles (11, 12, 13) appartenant à un réseau de communication mobile sélectionné ou faisant partie de celui-ci,
la station mobile (20) étant configurée de telle sorte que, pour être connectée au réseau de communication mobile domestique (500), la station mobile (20) s'enregistre préalablement auprès d'une cellule radio préliminaire des cellules radio disponibles (11, 12, 13), la cellule radio préliminaire appartenant à ou faisant partie d'un réseau de communication mobile préliminaire, dans lequel les données de mesure de réception ainsi que les données de sélection de réseau sont transmises et/ou reçues en utilisant le réseau de communication mobile préliminaire.

8. Système ou réseau de communication mobile pour effectuer la sélection de réseau d'une station mobile (20), le système ou réseau de communication mobile comprenant la station mobile (20), la station mobile (20) se trouvant dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300), dans lequel le système ou le réseau de communication mobile est configuré pour agir en tant que réseau de communication mobile domestique (500) pour ou concernant la station mobile (20), et dans lequel, tout en étant dans l'environnement radio, la station mobile (20) est capable de mesurer ou de détecter des conditions de réception concernant la pluralité de cellules radio disponibles (11, 12, 13), dans lequel, afin d'effectuer la sélection de réseau, le système ou le réseau de communication mobile est configuré de telle sorte que :
-- le réseau de communication mobile domestique (500) reçoit des données de mesure de réception, générées par la station mobile (20) sur la base de la mesure ou de la détection par la station mobile (20) des conditions de réception concernant la pluralité de cellules radio disponibles (11, 12, 13),
-- le réseau de communication mobile domestique (500) transmet des données de sélection de réseau à la station mobile (20), et
-- à l'aide des données de sélection de réseau reçues du réseau de communication mobile domestique (500), un enregistrement de la station mobile (20) s'effectue avec une cellule radio sélectionnée parmi les cellules radio disponibles (11, 12, 13) appartenant à un réseau de communication mobile sélectionné ou faisant partie de celui-ci,
dans lequel, afin d'être pourvue d'une connectivité avec le réseau de communication mobile domestique (500), la station mobile (20) est configurée pour s'enregistrer préalablement auprès d'une cellule radio préliminaire des cellules radio disponibles (11, 12, 13), la cellule radio préliminaire appartenant à ou faisant partie d'un réseau de communication mobile préliminaire, dans lequel les données de mesure de réception ainsi que les données de sélection de réseau sont transmises et/ou reçues en utilisant le réseau de communication mobile préliminaire.

9. Programme comprenant un code de programme lisible par ordinateur qui, lorsqu'il est exécuté sur une station mobile (20), amène la station mobile (20) à exécuter un procédé selon l'une des revendications 1 à 6.

10. Support lisible par ordinateur comprenant des instructions qui, lorsqu'elles sont exécutées sur une station mobile (20), amènent la station mobile (20) à exécuter un procédé selon l'une des revendications 1 à 6.
